# EUROPEAN PATENT APPLICATION

(11) **EP 3 751 032 A1**
(43) Date of publication of application: **16.12.2020**
(21) Application number: 19179473.4
(22) Date of filing: 11.06.2019
(51) Int. Cl.: D02G 3/40, D03D 15/00, B29B 15/12, B29C 70/22

(54) **FABRICS WOVEN BY SPREAD TOW YARNS CONSISTING OF POLYMER MATRIX COMPOSITE AND METHOD FOR PRODUCING THE SAME**

(71) Applicant: Corex Materials Corporation, Taichung City (TW)
(72) Inventor: CHIU, Shao-Chen, Taichung City (TW); LIN, Yu-Chen, Taichung City (TW); HSU, Po-Yueh, Taichung City (TW); LIU, Cheng-Chiu, Taichung City (TW); LIN, Tsung-Ying, Taiwan, R.O.C. (TW)
(74) Representative: Hauck Patentanwaltspartnerschaft mbB

(57) **Abstract**

A fabric woven by spread tow yarns has multiple spread tow yarns. Each one of the multiple spread tow yarns is made of matrix (20) being thermoplastic polymer and having multiple fibers (10) unidirectionally arranged. The fiber areal weight of each one of the multiple spread tow yarns is larger than or equal to 70 g/m² and is less than or equal to 160 g/m²; the width of each one of the multiple spread tow yarns is less than or equal to 100 cm; and the resin content of each one of the multiple spread tow yarns is larger than or equal to 30 % and is less than or equal to 50 %. The widths and the fiber areal weights and the resin content of the spread tow yarns are low and are capable of providing a thin fabric woven by the spread tow yarns.

## Description

### 1. Field of the Invention

The present invention relates to a fabric made of polymer matrix composite, and more particularly to fabrics woven by spread tow yarns consisting of thermoplastic composite and the method for production of the fabrics.

### 2. Description of Related Art

The conventional spread tow yarns manufactured with prepreg sheets consisting of thermosetting composite has drawbacks as follows. Since the thermosetting composite are sticky at room temperature, the prepreg sheets made of thermosetting composite requires release papers to prevent the thermosetting composite from adhering together. The release papers have to be removed before usage of the prepreg sheets consisting of thermosetting composite. Producing steps thereafter have to be proceeded under low temperature condition to avoid the prepreg sheets from setting. Furthermore, the prepreg sheets consist of thermosetting composite are not sticky after heating and cannot adhere to each other. Additional impregnation and additional plastic have been provided for laminating and compressing. Therefore, the producing process of the conventional spread tow yarns manufactured of the prepreg sheets consisting of thermosetting composite is inconvenient. Moreover, conformance of dimensions of the conventional spread tow yarns manufactured with the prepreg sheets consisting of thermoplastic composite is unstable and cannot satisfy demands of the market.

To overcome the shortcomings of the fabric woven by conventional spread tow yarns, the present invention provides a fabric woven by spread tow yarns to mitigate or obviate the aforementioned problems.

The main objective of the present invention is to provide fabrics woven by spread tow yarns consisting of polymer matrix composite and the method for production of the fabrics to lower fiber areal weight of each spread tow yarn and expand the width of each spread tow yarn.

The fabric woven by spread tow yarns comprises multiple spread tow yarns. Each one of the multiple spread tow yarns is made of a thermoplastic matrix and having multiple fibers unidirectionally arranged. The fiber areal weight of each one of the multiple spread tow yarns is larger than or equal to 70 g/m² and is less than or equal to 160 g/m²; the width of each one of the multiple spread tow yarns is less than or equal to 100 cm; and the resin content of each one of the multiple spread tow yarns is larger than or equal to 30 % and is less than or equal to 50 %. The widths and the fiber areal weights and the resin content of the spread tow yarns are low and are capable of providing a thin fabric woven by the spread tow yarns.

Other objects, advantages, and novel features of the invention will become more apparent from the following detailed description when taken in conjunction with the accompanying drawings.

### In the drawings:

Fig. 1 is a cross-sectional side view of a prepreg sheet produced by the method in accordance with the present invention;
Fig. 2 is a block diagram of the method in accordance with the present invention;
Fig. 3 is schematic diagram showing that a dry prepreg sheet is cut into yarns and the yarns are wound;
Fig. 4 is a perspective view of a fabric woven by spread tow yarns by the method in accordance with the present invention shown in Fig. 2; and
Fig. 5 is a perspective view of another fabric woven by spread tow yarns by the method in accordance with the present invention shown in Fig. 2.

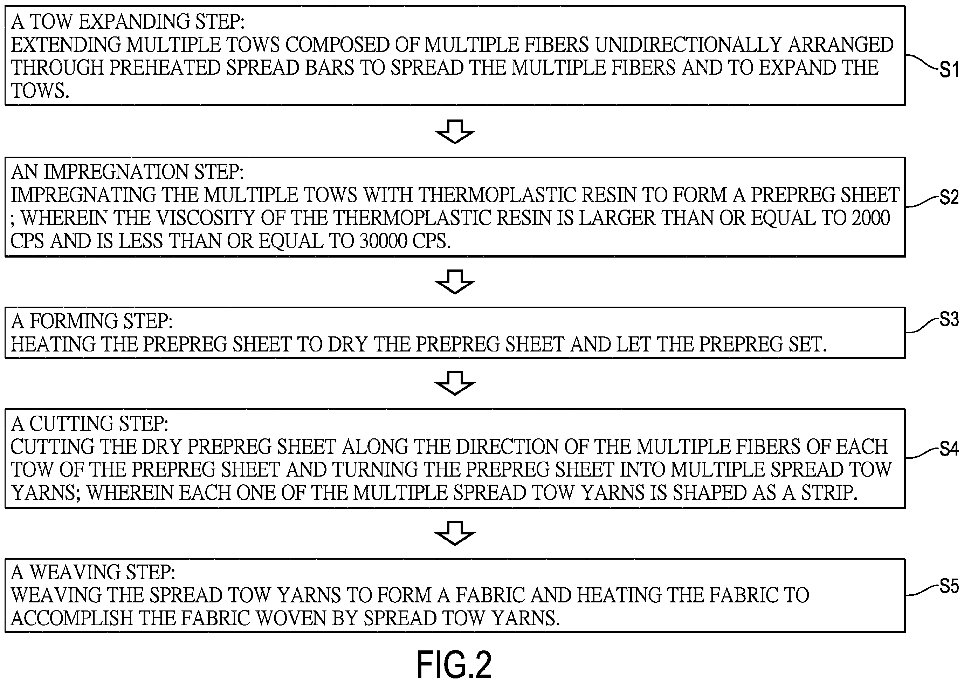

With reference to Fig. 2, a method for producing fabrics woven by spread tow yarns in accordance with the present invention has a tow spreading step S1, an impregnation step S2, a forming step S3, a cutting step S4, and a weaving step S5.

Each one of multiple tows has multiple fibers 10 unidirectionally arranged. In the tow expanding step S1, the multiple tows extend through preheated spread bars. The spread bars provide the multiple fibers 10 with tension to spread the multiple fibers 10 and expand the width of each tow to a required value. The temperature of each one of the spread bars is higher than or equal to 80 °C and is less than or equal to 120 °C. An angle defined between the horizon and each one of the fibers 10 is larger than or equal to 10° and is less than or equal to 70°. The multiple fibers 10 are spread, and each one of the tows turns into a flat tow with unidirectional fibers 10.

In the impregnation step S2: multiple tows that have been flattened and expanded are impregnated with matrix 20 to form a prepreg sheet. The matrix 20 is thermoplastic resin. The viscosity of the matrix 20 that is the thermoplastic resin is larger than or equal to 2000 cPs and is less than or equal to 30000 cPs to provide the matrix 20 with sufficient fluidity.

In the forming step S3: the prepreg sheet is heated to let the prepreg sheet dry. In the forming step S3, the prepreg sheet being dry is wound on a bobbin.

In the cutting step S4: the dry prepreg sheet is cut along the direction of the fibers 10 into multiple spread tow yarns with required width. In the cutting step S4, multiple prepreg sheets with different fiber directions are laminated and compressed in advance, and then cut into multiple spread tow yarns shaped as strips.

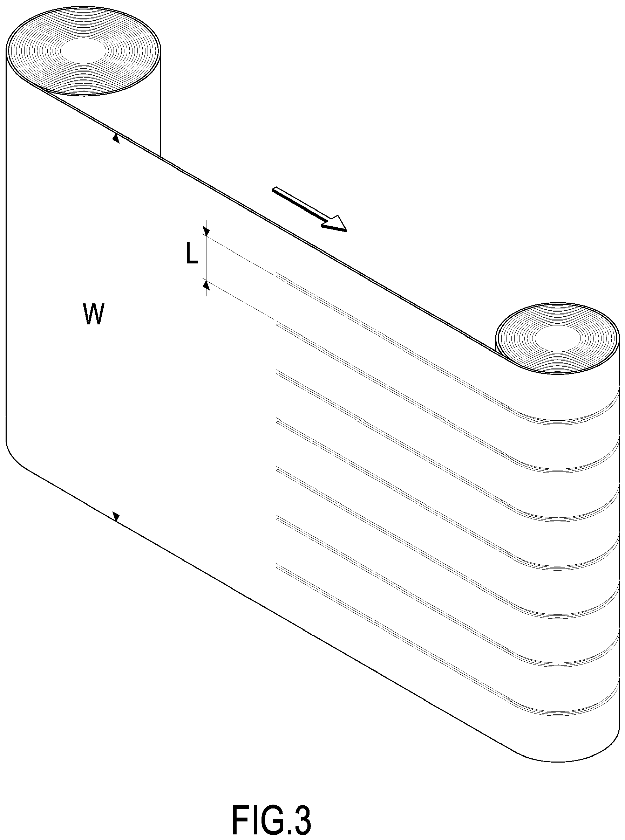

With reference to Fig. 3, the prepreg sheet wound on the bobbin is released for cutting. In the present invention, the width W of each prepreg sheet 20 reaches 100 cm at most, and the width L of each one of the spread tow yarns reaches 0.5 cm at least. The width L of each one of the spread tow yarns is wider than or equal to 0.5 cm and is thinner than or equal to 100 cm.

In the weaving step S5: the spread tow yarns are weaved according to designs to form a fabric. The fabric is heated again for maintaining the pattern of the fabric. In the weaving step S5, the fabric is heated to a temperature for maintaining the pattern. The temperature is higher than the glass transition temperature (Tg) of the thermoplastic resin.

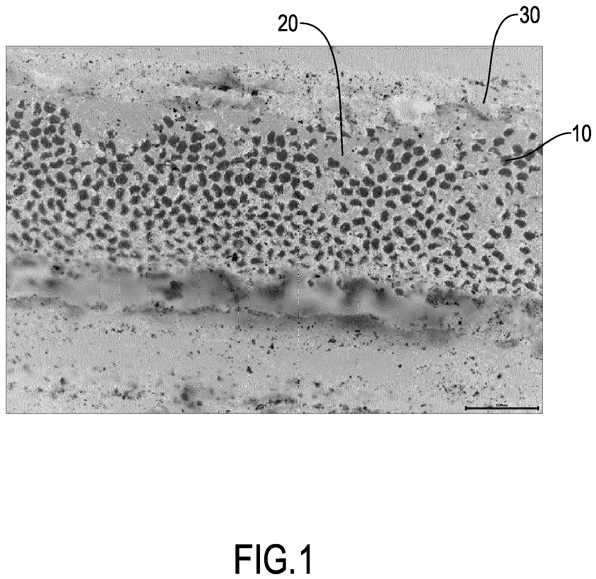

With reference to Fig. 1, a cross-sectional side view of the prepreg sheet produced by the method in accordance with the present invention is shown via a microscope. The white spots are fibers 10 distributed within the matrix 20. Two layers 30 disposed beside the matrix 20 are Epoxy 30. The Epoxy 30 is added for convenience of observation by the microscope. In Fig. 1, the matrix 20 sufficiently permeates the fibers 10.

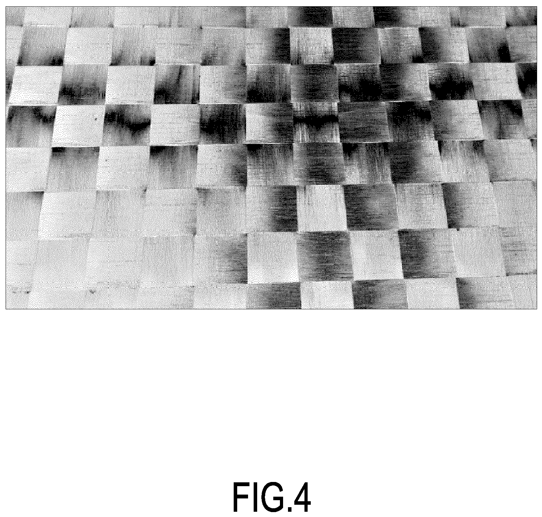

With reference to Fig. 4, the spread tow yarns are dyed and are perpendicularly weaved to turn into a fabric woven by spread tow yarns made of polymer matrix composite.

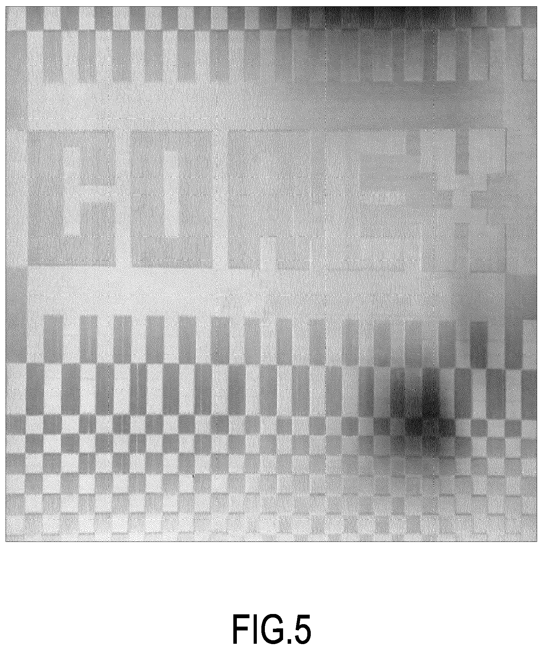

With reference to Fig. 5, the spread toe yarns are weaved to turn into another fabric woven by spread tow yarns made of polymer matrix composite.

The fabric produced by the method in accordance with the present invention is weaved by the spread tow yarns. Each one of the spread tow yarns consists of multiple fibers 10 and the matrix 20. The multiple fibers 10 are unidirectionally arranged. Each one of the multiple fibers 10 may be a carbon fiber, a glass fiber, or other reinforcements. The matrix 20 is thermoplastic polymer. The fiber areal weight (FAW) of each one of the spread tow yarns is larger than or equal to 70 g/m² and is less than or equal to 160 g/m². The resin content (RC) of each one of the spread tow yarns is larger than or equal to 30 % and is less than or equal to 50 % in weight. The width of each one of the multiple spread tow yarns reaches 100 cm at most.

Preferably, the fabric produced by the method in accordance with the present invention has the lowest thickness and the most stable production yield as the fiber areal weight (FAW) of each one of the spread tow yarns is larger than or equal to 70 g/m² and is less than or equal to 100 g/m². The resin content (RC) of each one of the spread tow yarns is larger than or equal to 32 % and is less than or equal to 47 %.

The fiber areal weight (FAW) and the resin content (RC) of each one of the spread tow yarns produced by the method in accordance with the present invention is low and can lower down the thickness of each one of the spread tow yarns and expand the width of each one of the spread tow yarns. The spread tow yarn with low fiber areal weight (FAW) and resin content (RC) make the fabric made of polymer matrix composite thinner as well.

Since the prepreg sheets consisting of thermosetting composite are sticky at room temperature, the prepreg sheets made of thermosetting composite requires release papers to prevent the thermosetting composite from adhering to itself. Moreover, the prepreg sheets made of thermosetting composite are difficult to be machined under lower temperature condition. Compared to the prepreg sheets consisting of thermosetting composite, the prepreg sheets in accordance with the present invention consisting of thermoplastic composite are dry after heating in the forming step S3. Therefore, the prepreg sheets in accordance with the present invention are not sticky and are easy to be cut into strips. The cutting step S4 and the weaving step S5 are capable of being processed at room temperature to promote the efficiency of production.

In the tow spreading step S1, each one of the fibers 10 unidirectionally arranged contacts an adjacent one of the fibers 10 and is blocked by said one of the fibers 10. Therefore, the widths of the multiple tows are equal. The widths and the fiber areal weights of the spread tow yarns and fabrics produced by the method in accordance with the present invention are even. The thickness of each one of the spread tow yarns and the fabric made from said spread tow yarns are fully tunable.

In the impregnation step S2, multiple tows being expanded are impregnated with a thermoplastic polymer to create a thermoplastic composite. Homogeneous impregnation of the fibers 10 is achieved. After improvements mentioned above, the width of each one of the prepreg sheets in accordance with the present invention reaches 100 cm at most and can be cut into more spread tow yarns shaped as strips. The productions of the spread tow yarns and fabric woven by the spread tow yarns are promoted. In addition, the integrality of fibers 10 are promoted in the cutting step S4. Errors in the cutting step S4 are reduced. Qualities of fabrics woven by spread tow yarns are promoted.

The method in accordance with the present invention is suitable for conventional apparatus for producing spread tow yarns. Without massively modifying the conventional producing apparatus, the purposes of reducing the fiber areal weight and the resin content of each one of the spread tow yarns are achieved. Consequently, the thickness of the fabric woven by spread tow yarns is reduced and the width of said fabric is expanded.

## Claims

1. A fabric woven by spread tow yarns, **characterized in that** the fabric comprises:
multiple spread tow yarns, each one of the multiple spread tow yarns having
a matrix (20) being thermoplastic polymer; and
multiple fibers (10) unidirectionally arranged within the matrix (20), wherein
the fiber areal weight of each one of the multiple spread tow yarns is larger than or equal to 70 g/m² and is less than or equal to 160 g/m²;
the width of each one of the multiple spread tow yarns is thinner than or equal to 100 cm; and
the resin content of each one of the multiple spread tow yarns is larger than or equal to 30 % and is less than or equal to 50 %.

2. The fabric woven by spread tow yarns as claimed in claim 1, wherein the fiber areal weight of each one of the multiple tow yarns is larger than or equal to 70 g/m² and is less than or equal to 100 g/m².

3. The fabric woven by spread tow yarns as claimed in claim 1, wherein the resin content is larger than or equal to 32 % and is less than or equal to 47 %.

4. A method for producing the fabric woven by spread tow yarns as claimed in claim 1, **characterized in that** the method comprising:
a tow expanding step (S1): extending multiple tows composed of multiple fibers (10) unidirectionally arranged through preheated spread bars to spread the multiple fibers and to expand the tows;
an impregnation step (S2): impregnating the multiple tows with thermoplastic resin to form a prepreg sheet; wherein the viscosity of the thermoplastic resin is larger than or equal to 2000 cPs and is less than or equal to 30000 cPs;
a forming step (S3): heating the prepreg sheets to dry the prepreg sheet and let the prepreg sheets set;
a cutting step (S4): cutting the dry prepreg sheet along the direction of the multiple fibers (10) of each tow of the prepreg sheet and turning the prepreg sheet into multiple spread tow yarns; wherein each one of the multiple spread tow yarns is shaped as a strip; and
a weaving step (S5): weaving the spread tow yarns to form a fabric and heating the fabric to accomplish the fabric woven by spread tow yarns.

5. The method for producing the fabric woven by spread tow yarns as claimed in claim 4, wherein the temperature of each one of the spread bars is higher than or equal to 80 °C and is less than or equal to 120 °C.

6. The method for producing the fabric woven by spread tow yarns as claimed in claim 4, wherein an angle defined between the horizon and each one of the multiple fibers (10) is larger than or equal to 10° and is less than or equal to 70°.

7. The method for producing the fabric woven by spread tow yarns as claimed in claim 4, wherein multiple dry prepreg sheets with different fiber directions are laminated and compressed before being cut into multiple spread tow yarns shaped as strips in the cutting step (S4).

8. The method for producing the fabric woven by spread tow yarns as claimed in claim 4, wherein a heating temperature in the weaving step (S5) is higher than the glass transition temperature of the thermoplastic resin.
